# EUROPEAN PATENT SPECIFICATION

(11) **EP 2 170 648 B1**
(45) Date of publication and mention of the grant of the patent: **14.08.2013**
(21) Application number: 08759081.6
(22) Date of filing: 06.06.2008
(51) Int. Cl.: B60N 2/70, B60N 2/72, A47C 7/28

(54) **SUSPENSION MAT FOR A MOTOR VEHICLE SEAT**
STÜTZMATTE FÜR EINEN KRAFTFAHRZEUGSITZ
MATELAS DE SUSPENSION POUR UN SIÈGE DE VÉHICULE À MOTEUR

(30) Priority: 23.07.2007 DE 102007034187
(43) Date of publication of application: 07.04.2010
(73) Proprietor: Fico Cables, Lda., 4471 Maia (PT)
(72) Inventor: ALBERTO VILELA BARROS, João, P-4470-263 Vermoim-Maia (PT)
(74) Representative: Hess, Peter K. G.
(86) International application number: PCT/EP2008/004544
(87) International publication number: WO 2009/012844

(56) References cited:
- EP-A- 1 170 170
- EP-A- 1 236 610
- EP-A- 1 593 547
- EP-A- 1 825 783
- DE-U1- 20 221 092

## Description

### 1. Field of the invention

The present invention relates to a suspension mat for a seat of a motor vehicle wherein the suspension mat is for example hooked into the backrest of the seat and supports the cushioning.

### 2. Prior art

Such suspension mats are known in the prior art in plurality of forms. So, for example the EP 0 874 575 B1 shows a suspension mat of a wire frame comprising to vertically arranged lateral wires around which a plurality of horizontally arranged lateral wires are round, which terminate hook-shaped ends. This suspension mat can be hooked into the frame of a backrest of a motor vehicle seat by means of the hook-shaped ends.

Such a suspension mat which is made of a wire frame has different disadvantages. So, for example particular steel sorts have to be used for the wires such that there is no break of the wires also at a use over several years and injuries of the passengers by means of broken support wires can be excludes. Due to the winding of the horizontal wires around the lateral wires in order to fix the horizontal wires, the production is only possible by means of expensive machines such that the final product is comparably cost-intensive. Finally, the weight of such a suspension mat of a wire frame is comparably high and the support area for the cushioning is comparably low.

A suspension mat according to the preamble of claim 1 is for instance known from EP 1 236 610 A2.

Another suspension mat is disclosed in EP 1 593 547 A1.

In view of the above-mentioned disadvantages of the prior art, the problem of the present invention is to provide a novel suspension mat, which can be produced more easily, which supports a larger support area for the cushioning, which comprises less weight, which minimizes the danger of injuries, which is easy to mount and which permanently guarantees a high seat comfort.

### 3. Summary of the invention

The above-mentioned problems are solved by a suspension mat according to patent claim 1.

Such a suspension mat can be easily hooked into the backrest frame of a motor-vehicle seat by means of the plurality of mounting wires of metal. Thereby, the mounting of the motor vehicle seat is done easily and fast and the mounting is particularly reliable. Further, such a suspension mat is easily manufactured in that a plurality of pre-bent mounting wires is injection molded with a plastic material, which then forms a single plane support element. Such a plane support element is preferably formed in such a way that it provides a large support area for the cushioning of a motor vehicle seat and on the other hand is so thin and interrupted by holes that it is particularly light weight and moisture may go through the plane support element.

Due to the combination of metallic mounting wires and plane support element of a plastic material, a suspension mat results, which combines the specific material properties of the metallic mounting wires, namely a high stability, flexibility and secure mounting and the properties of the support element, namely low weight, high flexibility, easy formability and easy manufacturing in order to form an optimal suspension mat.

The suspension mat comprises at least one extension area, such that the suspension mat can be extended in horizontal direction H. The suspension area enables on the one hand a single hooking in of the mounting wires into the frame of the motor vehicle seat and on the other hand it provides a certain flexibility to the suspension mat which increases the comfort of the seat.

Preferably, the extension area comprises vertically arranged convex areas within the support element. By means of the vertically arranged convex areas within the support element, the support element itself comprises the possibility to extend in vertical direction H, wherein the extension area not directly abuts the seat cushioning and thereby no friction happens at this area with the seat cushioning.

The mounting wires comprise angled areas. The angled areas can be easily straightened such that the ends of the mounting wires can easily be moved away from each other in horizontal direction H such that the suspension mat can easily be hooked in the frame of a motor vehicle seat. The angled areas act as integrated elastic springs within the mounting wires.

The support element comprises openings in the extension area into which the angled portions of the mounting wires are located. Thereby, the angled elongation portions of the mounting wires are aligned in vertical direction with the convex elongation areas of the support element. Since the angled areas run within the openings of the support element, there is no friction between the mounting wires and the plane supporting element, such that at this position it is excluded that at this position undesired scratching noises or a frictionally wear of the support element happens. Thereby, it is also possible to rigidly injection-mold the mounting wires into the plane support element, without the possibility of a relative movement between the mounting wires and the support element. A friction or noise generation of the mounting wires with the support element is thereby excluded.

In a further preferred embodiment, the mounting wires extend over the right and the left side of the plane support element and are respectively unitarily formed. This increases the stability of the suspension mat and a simple injection molding around the mounting wires is sufficient for the mounting thereof at the support element.

In a further preferred embodiment, the mounting wires comprise mounting hooks at their respective ends. By means of the mounting hooks, the suspension mat can easily be hooked into the frame of a motor vehicle seat.

In a further preferred embodiment, the mounting hooks are covered by a plastic material, which is simultaneously injection molded with the support element. Preferably, the plastic material for covering the mounting hooks is the same as the one for the plane support element. The mounting hooks are covered with the plastic material, such that the metallic mounting hooks not directly abut the metallic frame of the motor vehicle seat and could generate noises. The plastic covering of the mounting hooks prevents such noises and decreases the friction between the mounting hooks and the frame.

In a further preferred embodiment, at least one mounting hook comprises an injection molded support surface, which is shaped as a section of a circle within its curve. By means of this injection molded support surface, which is shaped as a section of a circle this mounting hook can be hooked into a simple flat surface of the frame of the motor vehicle seat, wherein a line shaped contact between the mounting hook and the contact face at the frame results. The line shaped contact face quasi provides a rotation axis around the mounting hook may pivot around a certain angle at the frame of the motor vehicle seat without scratching or without generating noises. Thereby, a certain angular movement of the mounting hook at the frame results, such that in case of a load onto the suspension mat, the mounting hooks may easily pivot and wherein the suspension mat may adapt to the load. In a further preferred embodiment, the support element comprises horizontal and vertical band-shaped portions which form a unitary grid structure of the support element. By means of this grid structure, the support element is particularly light weight and provides a comparatively large support surface. Further, the openings within the grid structure allow a good climate control of the cushioning.

### 4. Short description of the drawings

In the following, preferred embodiments of the invention are explained by means of the accompanying drawings, in which shows:
- Fig. 1: a three-dimensional view of a backrest of a motor vehicle seat with a preferred embodiment of a suspension mat according to the invention;
- Fig. 2: an elongated view of a preferred embodiment of a suspension mat according to the invention;
- Fig. 3: an elongated view from the back of the suspension mat according to figure 2;
- Fig. 4: a side view of the suspension mat of fig. 2,
- Fig. 5: a first embodiment of a mounting hook;
- Fig. 6: a second embodiment of a mounting hook;
- Fig. 7: a three-dimensional view of the mounting hook of fig. 5 hooked into the frame of a backrest; and
- Fig. 8: a three-dimensional view of the mounting hook of fig. 6 hooked into a frame of a backrest.

### 5. Description of preferred embodiments

In the following preferred embodiments of the invention are described with respect to the figures.

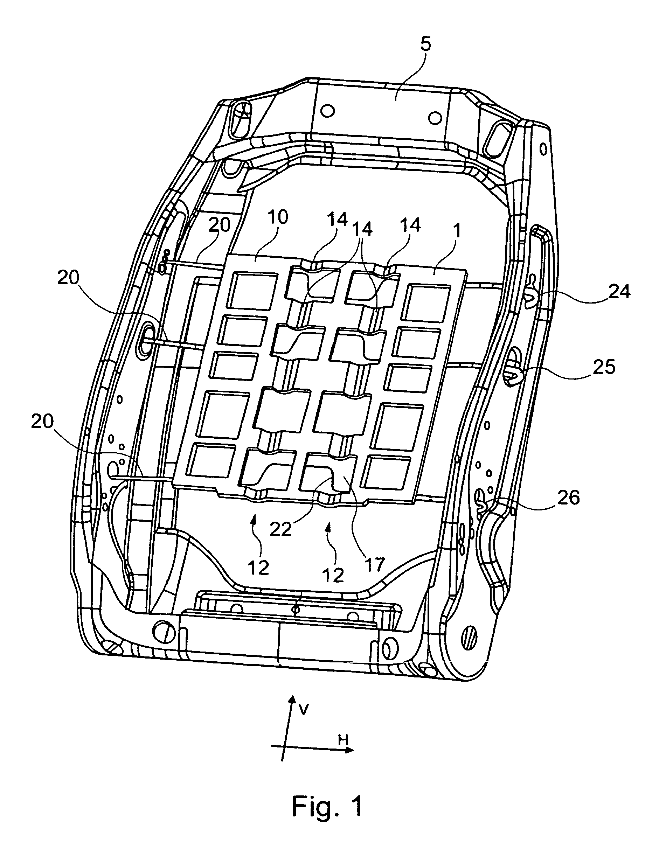

Fig. 1 shows frame 5 of a backrest of a seat for a motor vehicle. The frame 5 in general is a stiff structure of a metallic sheet metal material. A suspension mat 1 is hooked into the frame 5, wherein the suspension mat 1 comprises of an integral - i.e. one-piece - plane support element 10 and three essentially horizontally arranged mounting wires 20, which are hooked into the lateral portions of the frame 5.

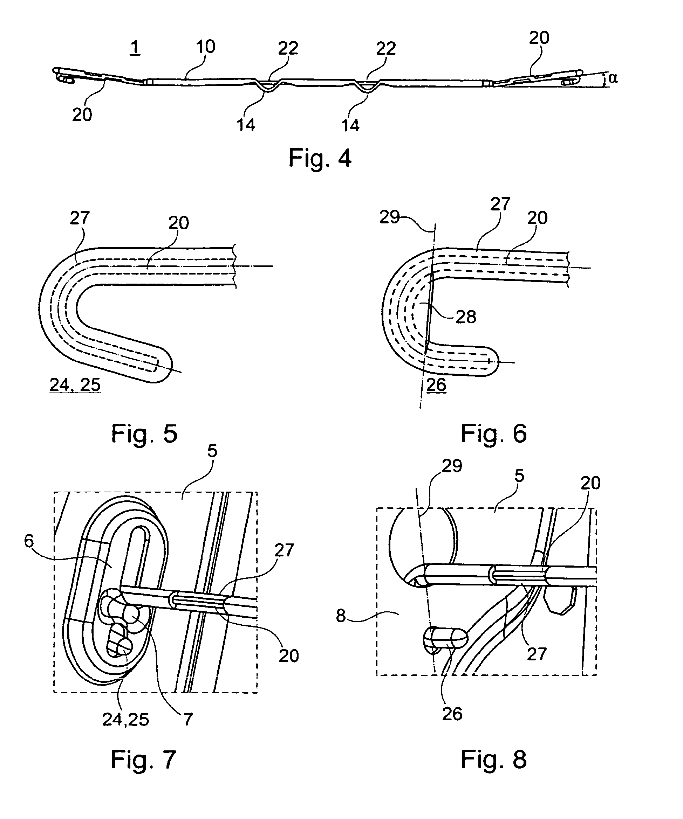

The support element 10 comprises of a plastic material and is injection molded around the metallic mounting wires 20. The suspension mat 1 comprises elongation portions 12 to be expandable in horizontal direction H, to be hooked into frame 5 and to provide a resilient support for the cushioning of the backrest. The extension areas 12 run in vertical direction V respectively to the right and to the left of the center of the support element 10. They consist of vertically arranged convex portions 14 within the support element 10 as it can be seen in fig. 4. Due to this convex shape, the support element 10 can be expanded in horizontal direction.

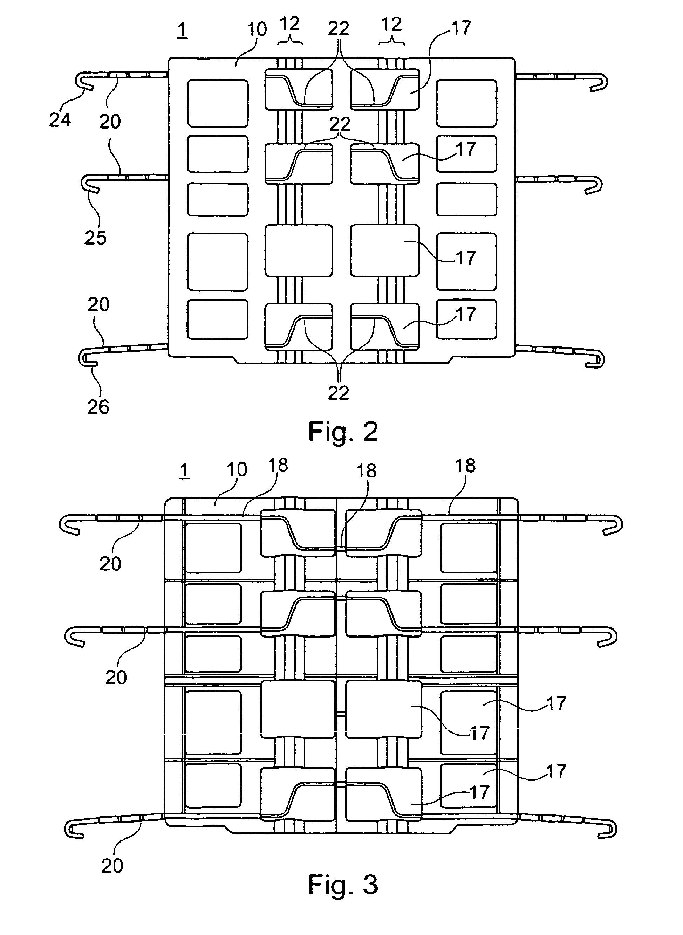

Fig. 2 shows a suspension mat 1 according to the invention from the front side and fig. 3 shows the same suspension mat 1 from the backside. The suspension mat 1 comprises free horizontally arranged mounting wires 20, which comprise at their ends mounting ends 24, 25, 26. As exemplarily shown for the top mounting wire 20 in figure 3, it is rigidly connected at connecting areas 18 with the support element 10 by means of injection molding the support element 10 around the mounting wires 20. To guarantee a horizontal expansion of the suspension mat 1, also the mounting wires 20 comprise extension portions, which are formed by the angled portions 22. In the portions 22, the mounting wires 20 are angled in an S shape such that their ends (at 24, 25, 26) can be easily moved away from each other in horizontal direction H. The angled portions 22 quasi act as integrated springs within the mounting wires 20.

As shown in Fig. 2, the angled portions 22 are arranged within the openings 17 of the plane support element 10 and are angled essentially in the plane of the support element 10. Thereby, on the one hand a movement of the mounting wires 20 is not hindered and on the other hand it is prevented that by this movement, the mounting wires 20 scratch at the support element 10 and thereby would generate noises.

As shown, the mounting hooks 24, 25, 26 are angled downwardly. However, any other orientation of the mounting hooks 24, 25, 26 is of course possible.

Fig. 4 shows the suspension mat 1 in a side view. As shown, the support element 10 can be slightly convexly bended and also the mounting wires 20 can be bent to the top up to an angle α of 20° with respect to the plane of the support element 10 to adapt the suspension mat 1 to the desired shape of the backrest.

Fig. 5 shows an embodiment of a mounting hook 24, 25 which is covered with plastic material 27. The covering 27 is simultaneously injection molded together with the support element 10. It prevents a direct contact of the metallic mounting hooks 24, 25, 26 with the frame 5, and thereby possible appearing scratch or rattling noises. The shape of the mounting hook 24, 25 of fig. 5 is suitable for receptacles 6 in frame 5 of fig. 7. At this kind of receptacles 6, a round web 7 is formed into the frame 5, wherein the round web 7 serves as contact face for the curve of the mounting hook 24, 25. By means of the rounded web 7, it is prevented that the plastic cover 27 of the mounting hook 24, 25 is damaged by the sheet metal of the frame 5 in course of the use.

Fig. 6 shows an alternative embodiment of a mounting hook 26. The mounting hook 26 differs from the mounting hooks 24, 25 in such a way that it comprises within its curve an injection molded support surface 28 in the shape of a circular section. Such a mounting hook 26 can be hooked into a receptacle 8 of the frame 5 according to figure 8. Thereby, the front edge of the support surface 28 abuts a flat portion of the frame 5. The front edge of the support surface 28 thereby forms a rotation axis 29 around which the mounting hook 26 may easily rotate. This embodiment of the mounting hooks 26 has the advantage that the receptacles 8 within frame 5 of the motor vehicle seat can be formed comparably easily, however, there will be no damaging of the plastic cover 27 of the mounting hook 26. Further, thereby a pivoting of the hook 26 at the frame 5 is facilitated.

As shown in figs. 7 and 8, the mounting wires 20 are not completely covered by the plastic materials 27, due to manufacturing reasons. They comprise sections which are not covered, such that the mounting wire 20 can be correctly positioned within an injection molded form (not shown) prior to the injection molding.

As shown in figs. 1, 2 and 3, the support element 10 comprises a unitary grid structure with horizontal 15 and vertical band shaped portions 16, a plurality of openings result, which enable an air circulation within the backrest.

A suspension mat 1 according to the invention is produced by placing the mounting wires 20 into an appropriate injection molded form and then a plane support element 10 is injection molded around the mounting wires 20. Thereby, preferably also the mounting wires 20 and particularly the mounting hooks 24, 25, 26 are covered with the plastic material 27 at connection areas 18.

Such a suspension mat 1 can thereby be manufactured with very little manufacturing effort and without assembly steps. Since no relative movement between the single components of the suspension mat 1 is given, the suspension mat 1 has a particularly high lifetime and thereby increases the security of the motor-vehicle seat. Particularly, injuries of the passengers of the motor vehicles by breaking parts of a suspension mat are excluded.

### List of reference signs

- 1: suspension mat
- 5: frame of a motor vehicle seat
- 6: receptacle
- 7: rounded web
- 8: receptacle
- 10: flat support element
- 12: extension area
- 14: convex portion
- 15: horizontal band shaped portions
- 16: vertical band shaped portions
- 17: openings
- 18: connection areas
- 20: mounting wires
- 22: angled portions
- 24, 25, 26: mounting hooks
- 27: plastic material
- 28: support surface
- 29: rotation axis

## Claims

1. Suspension mat (1) for a seat of a motor vehicle, consisting of:
a) a single one-piece plane support element (10); and
b) a plurality of metal mounting wires (20); wherein
c) the support element (10) consists of a plastic material and is injection molded around the mounting wires (20); wherein
the suspension mat (1) is further **characterised in that**
d) the support element (10) comprises at least one extension area (12), such that the suspension mat (1) is extendable in horizontal direction (H); wherein
e) the mounting wires (20) comprise angled portions (22); and wherein
f) the support element (10) comprises openings (17) within the extension area (12) in which the angled portions (22) of the mounting wires (20) are arranged.

2. Suspension mat according to claim 1, wherein the extension area (12) comprises vertically arranged convex portions (14) within the support element (10).

3. Suspension mat according to claim 1 or 2, wherein the mounting wires (20) are respectively formed integrally and extend horizontally beyond the left and the right side of the support element (10).

4. Suspension mat according to one of the previous claims, wherein the mounting wires (20) comprise mounting hooks (24, 25, 26) at their respective ends.

5. Suspension mat according to claim 4, wherein the mounting hooks (24, 25, 26) are covered with a plastic material (27), which is simultaneously injection molded with the support element (10).

6. Suspension mat according to claim 4 or 5, wherein at least one mounting hook (26) comprises an injection molded support face (28) having a shape of a segment of a circle within the bending of the hook (26).

7. Suspension mat according to one of the previous claims, wherein the support element (10) comprises horizontal (15) and vertical band shaped portions (16) which form an integral grid-like structure of the support element (10).

## Patentansprüche

1. Stützmatte (1) für einen Sitz für ein Kraftfahrzeug, aufweisend:
a. ein einzelnes einteiliges flächiges Stützelement (10); und
b. eine Mehrzahl von metallischen Verankerungsdrähten (20); wobei
c. das Stützelement (10) aus einem Kunststoffmaterial besteht und um die Verankerungsdrähte (20) herum spritzgegossen ist; wobei
die Sitzmatte (1) weiter **dadurch gekennzeichnet ist, dass**
d. das Stützelement (10) mindestens einen Ausdehnungsbereich (12) aufweist, so dass die Stützmatte (1) in horizontaler Richtung (H) ausdehnbar ist; wobei
e. die Verankerungsdrähte (20) abgewinkelte Bereiche (22) aufweisen; und wobei
f. das Stützelement (10) im Ausdehnungsbereich (12) Öffnungen (17) aufweist, in denen die abgewinkelten Bereiche (22) der Verankerungsdrähte (20) angeordnet sind.

2. Stützmatte gemäß Anspruch 1, wobei der Ausdehnungsbereich (12) vertikal angeordnete konvexe Bereiche (14) im Stützelement (10) aufweist.

3. Stützmatte gemäß Anspruch 1 oder 2, wobei die Verankerungsdrähte (20) jeweils einstückig ausgebildet sind und sich über die linke und rechte Seite des Stützelements (10) hinaus erstrecken.

4. Stützmatte gemäß einem der vorherigen Ansprüche, wobei die Verankerungsdrähte (20) an ihren jeweiligen Enden Verankerungshaken (24, 25, 26) aufweisen.

5. Stützmatte gemäß Anspruch 4, wobei die Verankerungshaken (24, 25, 26) mit einem Kunststoffmaterial (27) ummantelt sind, das gleichzeitig mit dem Stützelement (10) spritzgegossen wird.

6. Stützmatte gemäß Anspruch 4 oder 5, wobei mindestens ein Verankerungshaken (26) innerhalb seiner Biegung eine angespritzte Auflagefläche (28) aufweist, welche die Form eines Kreisabschnitts aufweist.

7. Stützmatte gemäß einem der vorherigen Ansprüche, wobei das Stützelement (10) horizontale (15) und vertikale bandförmige Bereiche (16) aufweist, die eine einteilige gitterartige Struktur des Stützelements (10) bilden.

## Revendications

1. Tapis de suspension (1) pour un siège d'un véhicule à moteur, consistant en :
a) un élément support plat unique en une seule pièce (10) ; et
b) une pluralité de fils de montage métalliques (20) ; où
c) l'élément support (10) consiste en une matière plastique et est moulé par injection autour des fils de montage (20) ; où
le tapis de suspension (1) est en outre **caractérisé en ce que** :
d) l'élément support (10) comprend au moins une zone d'extension (12) telle que le tapis de suspension (1) soit extensible en direction horizontale (H) ; où
e) les fils de montage (20) comprennent des parties coudées (22) ; et où
f) l'élément support (10) comprend à l'intérieur de la zone d'extension (12) des ouvertures (17) dans lesquelles sont disposées les parties coudées (22) des fils de montage (20).

2. Tapis de suspension selon la revendication 1, dans lequel la zone d'extension (12) comprend des parties convexes disposées verticalement (14) à l'intérieur de l'élément support (10).

3. Tapis de suspension selon la revendication 1 ou 2, dans lequel les fils de montage (20) sont respectivement formés monobloc et s'étendent horizontalement au-delà du côté gauche et droit de l'élément support (10).

4. Tapis de suspension selon l'une des revendications précédentes, dans lequel les fils de montage (20) comprennent des crochets de montage (24, 25, 26) à leurs extrémités respectives.

5. Tapis de suspension selon la revendication 4, dans lequel les crochets de montage (24, 25, 26) sont recouverts d'une matière plastique (27), qui est moulée par injection simultanément avec l'élément support (10).

6. Tapis de suspension selon la revendication 4 ou 5, dans lequel au moins un crochet de montage (26) comprend une face support moulée par injection (28) présentant une forme d'un segment d'un cercle à l'intérieur de la courbure du crochet (26).

7. Tapis de suspension selon l'une des revendications précédentes, dans lequel l'élément support (10) comprend des parties conformées en bandes horizontales (15) et verticales (16) qui forment une structure monobloc semblable à une grille de l'élément support (10).
